# EUROPÄISCHE PATENTSCHRIFT

(11) **EP 2 873 779 B1**
(45) Veröffentlichungstag und Bekanntmachung des Hinweises auf die Patenterteilung: **03.02.2016**
(21) Anmeldenummer: 13192680.0
(22) Anmeldetag: 13.11.2013
(51) Int. Cl.: B32B 5/20, B32B 5/32, B32B 7/12, C08J 9/236, E04B 1/76

(54) **Verfahren zur Herstellung eines mehrschichtigen Formkörpers sowie mehrschichtiger Formkörper zur Wärmedämmung von Gebäuden**
Method for producing a multilayered moulded body and multilayered moulded body for the thermal insulation of buildings
Procédé de fabrication d'un corps moulé à plusieurs couches et corps moulé à plusieurs couches destiné à l'isolation thermique de bâtiments

(43) Veröffentlichungstag der Anmeldung: 20.05.2015
(73) Patentinhaber: STO SE & Co. KGaA, 79780 Stühlingen (DE)
(72) Erfinder: Hitzler, Martin, 78244 Gottmadingen (DE); Weier, Andreas, 78647 Trossingen (DE); Burgeth, Gerald, 79787 Lauchringen (DE); Eggi, Joachim, 79780 Stühlingen-Weizen (DE); Engelniederhammer, Peter, 89426 Wittislingen (DE); Köhnlein, Jochen, 86753 Möttingen (DE); Koerdt, Frithjof, 12524 Berlin (DE); Bauer, Martin, 97941 Tauberbischofsheim (DE)
(74) Vertreter: Gottschalk, Matthias

(56) Entgegenhaltungen:
- EP-A1- 2 527 124
- WO-A1-2012/146577
- WO-A2-2011/113795
- US-A- 3 839 518
- US-A1- 2005 176 833

## Beschreibung

Die Erfindung betrifft ein Verfahren zur Herstellung eines mehrschichtigen Formkörpers zur Wärmedämmung von Gebäuden mit den Merkmalen des Oberbegriffs des Anspruchs 1. Ferner betrifft die Erfindung einen mehrschichtigen Formkörper zur Wärmedämmung von Gebäuden.

### Stand der Technik

Mehrschichtige Formkörper zur Wärmedämmung von Gebäuden mit wenigstens einer Schicht aus einem expandierten oder extrudierten Polystyrol-Hartschaum sind aus dem Stand der Technik bereits bekannt. Die Verbindung der aus Polystyrol-Hartschaum bestehenden Schicht mit wenigstens einer weiteren Schicht kann in Abhängigkeit von der konkreten Ausgestaltung und/oder Anordnung der weiteren Schicht verschiedene Vorteile haben.

Eine außen liegende Schicht eines derartigen mehrschichtigen Formkörpers zur Wärmedämmung von Gebäuden besitzt in der Regel eine zusätzliche Schutzfunktion. Zwar ist es zur Realisierung einer zusätzlichen, ggf. nur temporären Schutzfunktion auch möglich, einen homogen aufgebauten Formkörper zur Wärmedämmung nach dessen Anbringung abzudecken, beispielsweise durch eine Verkleidung oder einen Behang, dies erfordert jedoch zusätzliche Arbeitsschritte und ist dementsprechend zeit- und kostenintensiv.

Aus der EP 2 557 247 A1 ist daher bereits eine zweischichtige Dämmplatte zur thermischen Isolierung von Gebäudeaußenfassaden bekannt, bei welcher beide Schichten aus expandiertem Polystyrol-Granulat bestehen, das athermane Stoffe zur Erhöhung der Wärmedämmwirkung enthält. Der zweiten Schicht sind zudem helle Farbpigmente zur Aufhellung zugegeben, so dass auftreffende Wärmestrahlen von der zweiten Schicht reflektiert werden, um die zweischichtige Dämmplatte spannungsfrei zu halten. Die Dämmplatte wird daher vorzugsweise mit der zweiten Schicht außen liegend an einer Gebäudeaußenfassade angebracht.

Die Herstellung der Dämmplatte der EP 2 557 247 A1 erfolgt in einer beheizbaren Form, wobei zur Ausbildung der ersten Schicht ein erstes expandiertes Polystyrol-Granulat und zur Ausbildung der zweiten Schicht ein zweites expandiertes Polystyrol-Granulat in die Form eingegeben und anschließend zu einer einstückigen Wärmedämmplatte verschweißt werden.

Eine mehrschichtige Wärmedämmplatte geht ferner aus der DE 20 2009 009 986 U1 hervor. Eine erste und zweite Schicht aus expandierbarem Polystyrol sind dabei derart verbunden, dass im Kontaktbereich der beiden Schichten Erhebungen der einen Schicht in Vertiefungen der anderen Schicht eingreifen. Um dies zu erreichen, wird die zweite Schicht auf die erste Schicht aufgeschäumt, oder umgekehrt. Das Aufschäumen kann dabei auch auf eine als Vorprodukt hergestellte Schicht erfolgen.

Im Stand der Technik wird demnach die thermische Verbindung der mehreren Schichten in einem Arbeitsgang mit deren Herstellung favorisiert. Darüber hinaus besteht aber auch die Möglichkeit, die mehreren Schichten separat herzustellen und nachträglich zu verbinden.

Ferner sind aus dem Stand der Technik Wärmedämmplatten bekannt, die zugleich eine Drainagefunktion besitzen. Derartige Dämmplatten werden vorrangig zur Wärmedämmung von im Erdreich liegenden Außenwänden eines Gebäudes eingesetzt. Ihre Aufgabe ist es, Feuchtigkeit vom Gebäude fern zu halten. Um dies zu erreichen, weisen derartige Dämmplatten an ihrer dem Gebäude zuzuwendenden Oberfläche häufig eine reliefartige Gestaltung auf, so dass zwischen der Außenwand und der Dämmplatte Hohlräume entstehen, über welche die Feuchtigkeit abtransportiert werden kann.

Eine als Drainageplatte einsetzbare Wärmedämmplatte geht beispielhaft aus der DE 10 2004 033 535 A1 hervor. Zur Realisierung der Drainagefunktion besitzt die Platte zumindest einseitig eine Profilierung. Die Profilierung kann beispielsweise in die Oberfläche der Platte eingearbeitete Rillen oder Vertiefungen umfassen. Diese dienen als Ablaufkanäle, so dass hierüber die Drainagefunktion realisierbar ist. Sofern die Platte nur einseitig profiliert ist, kommt die profilierte Oberfläche bevorzugt an der zu dämmenden Gebäudeaußenwand zu liegen. Die der Gebäudeaußenwand abgewandte Oberfläche kann mit einem Filtervlies versehen sein, um das Einspülen von Erdreich zu verhindern. Insofern kann auch diese Wärmedämmplatte mehrschichtig ausgebildet sein, wobei wiederum das Filtervlies als weitere Schicht eine Schutzfunktion erfüllt.

Ausgehend von dem vorstehend genannten Stand der Technik liegt der vorliegenden Erfindung die Aufgabe zugrunde, ein Verfahren zur Herstellung eines mehrschichtigen Formkörpers zur Wärmedämmung von Gebäuden anzugeben, das einfach und kostengünstig durchzuführen ist. Insbesondere soll das Verfahren die Herstellung eines mehrschichtigen Formkörpers ermöglichen, der wenigstens eine Schicht aus expandiertem und/oder extrudiertem Polystyrol-Hartschaum umfasst. Der nach diesem Verfahren hergestellte Formkörper soll vorteilhafterweise neben einer wärmedämmenden Wirkung zusätzlich eine Drainagefunktion besitzen und somit ferner als Drainageplatte einsetzbar sein. Darüber hinaus soll ein mehrschichtiger Formkörper zur Wärmedämmung von Gebäuden bereitgestellt werden, der zusätzlich eine Drainagefunktion zu erfüllen vermag.

Zur Lösung der Aufgabe wird das Verfahren mit den Merkmalen des Anspruchs 1 angegeben. Vorteilhafte Weiterbildungen der Erfindung sind den Unteransprüchen zu entnehmen. Darüber hinaus wird ein mehrschichtiger Formkörper vorgeschlagen, der als Dämm- und Drainageplatte einsetzbar ist. Der vorgeschlagene Formköper kann insbesondere nach dem erfindungsgemäßen Verfahren hergestellt sein.

### Offenbarung der Erfindung

Bei dem zur Herstellung eines mehrschichtigen Formkörpers vorgeschlagenen Verfahren werden schäumbare oder vorgeschäumte Polymer-Partikel zur Ausbildung einer Schicht verwendet. Erfindungsgemäß werden die schäumbaren oder vorgeschäumten Polymer-Partikel zumindest teilweise mit einem organischen Bindemittel beschichtet und in einer Form zur Durchführung eines Endschäumprozesses mit wenigstens einer Platte aus expandiertem oder extrudiertem Polystyrol-Hartschaum verbunden.

Die Beschichtung der vorgeschäumten Polymer-Partikel mit einem organischen Bindemittel erfüllt mehrere Funktionen.

Zum Einen beeinflusst die Beschichtung das Expansionsverhalten der Polymer-Partikel während des Endschäumprozesses in der Weise, dass die Expansion, d. h. die Volumenvergrößerung, der einzelnen Partikel verringert wird. Denn die Beschichtung wirkt wie ein Korsett, das der Expansion entgegen wirkt. Dies hat zur Folge, dass nach dem Endschäumprozess zwischen den einzelnen Partikeln ein Zwickelvolumen verbleibt, das ein zusammenhängendes, wasserdurchlässiges Hohlraumvolumen ausbildet.

Zum Anderen fördert das Bindemittel einen stabilen Verbund der Polymer-Partikel untereinander, da das Bindemittel zugleich als Kleber dient. Dies ist insbesondere von Vorteil, da - wie vorstehend bereits erwähnt - die Polymer-Partikel während des Endschäumprozesses eine geringere Ausdehnung erfahren und somit der Kontaktbereich der Partikel untereinander auf einzelne Kontaktpunkte beschränkt bleibt. Ein großflächiges Verschweißen der Partikel findet demnach nicht statt. Das Bindemittel vermag jedoch durch Filmbildung im Kontaktbereich der Partikel einen stabilen Verbund der Partikel untereinander zu erreichen, so dass der geringe Grad der Verschweißung hierüber kompensiert wird.

Die wenigstens eine Platte aus expandiertem oder extrudiertem Polystyrol-Hartschaum erfüllt ebenfalls mehrere Funktionen.

Einerseits vereinfacht die Platte das Herstellverfahren, wenn diese beispielsweise vor dem Einbringen der Polymer-Partikel in die Form eingestellt oder eingelegt wird. Die Platte bildet dann eine Trennlage aus, welche das Entformen des Formkörpers erleichtert. Denn die Platte verhindert, dass die mit einem organischen Bindemittel beschichteten Partikel in Kontakt mit der Form gelangen, hieran haften bleiben und beim Entformen zu Ausbrüchen an der Oberfläche des Formkörpers führen.

Andererseits besitzt die Platte aus expandiertem oder extrudiertem Polystyrol-Hartschaum selbst eine weitgehend glatte Oberfläche, die besonders gut zur Aufnahme einer Putz- oder Mörtelschicht geeignet ist. Über die glatte Oberfläche ist zudem ein Putz- oder Mörtelauftrag in gleichbleibender Stärke sichergestellt, da sich keine Putz- oder Mörtelmasse in Oberflächenvertiefungen der Platte absetzen kann.

Die Platte aus expandiertem oder extrudiertem Polystyrol-Haftschaum bildet demnach bevorzugt eine Deckschicht aus. Als Platte kann eine herkömmliche EPS- oder XPS-Platte eingesetzt werden. Zur Schonung der Ressourcen und/oder zur Kostenreduzierung wird vorzugsweise eine Recycling-Platte eingesetzt.

Die Platte aus expandiertem oder extrudiertem Polystyrol-Hartschaum besitzt ferner eine aussteifende Funktion und trägt somit zur mechanischen Stabilität eines nach dem erfindungsgemäßen Verfahren hergestellten mehrschichtigen Formkörpers bei. Dies gilt insbesondere, wenn die das zusammenhängende Hohlraumvolumen aufweisende Schicht beidseits von einer Platte aus expandiertem oder extrudiertem Polystyrol-Hartschaum abgedeckt wird.

Da es sich bei der Platte aus expandiertem oder extrudiertem Polystyrol-Hartschaum um bereits endgeschäumtes, d. h. "totes" Material handelt, kann eine stabile Verbindung der Platte mit den noch endzuschäumenden Polymer-Partikeln nicht allein über eine Verschweißung bewirkt werden. Da die noch endzuschäumenden Polymer-Partikel bei dem vorgeschlagenen Verfahren jedoch zuvor mit einem organischen Bindemittel beschichtet werden, kann ein stabiler Verbund zwischen den Partikeln und der Platte vorliegend über das organische Bindemittel bewirkt werden. Hierin ist demnach eine weitere Funktion des organischen Bindemittels zu sehen.

Bevorzugt werden zur Beschichtung der schäumbaren oder vorgeschäumten Polymer-Partikel 0,5-75 Gew.-%, vorzugsweise 1-50 Gew.-%, weiterhin vorzugsweise 1,5-25 Gew.-% wenigstens eines organischen Bindemittels bezogen auf das Gesamtgewicht der schäumbaren oder vorgeschäumten Polymer-Partikel verwendet. Hieraus folgt, dass der Volumenanteil des Bindemittels verhältnismäßig gering ist. Der geringe Volumenanteil des Bindemittels bewirkt zum Einen, dass die hervorragenden Wärmedämmeigenschaften des Polymerschaums im Wesentlichen erhalten bleiben. Zum Anderen bewirkt er, dass das Zwickelvolumen zwischen den Polymer-Partikeln weitgehend frei von Bindemittel bleibt und auf diese Weise ein zusammenhängendes, wasserdurchlässiges Hohlraumvolumen ausbildet. Der Bindemittelanteil ist jedoch ausreichend hoch gewählt, um einen stabilen Verbund der Partikel untereinander sowie mit der wenigstens einen Platte zu erzielen. Indem zudem ein organisches Bindemittel verwendet wird, das beispielsweise im Vergleich zu einem mineralischen Bindemittel eine erhöhte Bindekraft besitzt, kann der Bindemittelanteil auf ein Minimum reduziert werden.

Bei der Durchführung des erfindungsgemäßen Verfahrens werden bevorzugt Polymer-Partikel aus Polystyrol (EPS), Polyethylen (EPE), Polypropylen (EPP) und/oder Polylactid (PLA) verwendet. Besonders bevorzugt finden Polystyrol-Partikel Einsatz, da diese kostengünstig herzustellen bzw. zu beschaffen sind.

Ferner bevorzugt wird ein duroplastisches Bindemittel, beispielsweise Epoxidharz und/oder Polyurethan, und/oder ein thermoplastisches Bindemittel, beispielsweise Homo-, Co- oder Terpolymere von Acrylat, Styrolacrylat, Vinylacetat, Ethylen, Vinylversatat, Vinyllaurat, Alkylacrylat und/oder Vinylchlorid, als organisches Bindemittel zum Beschichten der schäumbaren oder vorgeschäumten Polymer-Partikel verwendet. Derartige Bindemittel besitzen eine hohe Bindekraft, so dass deren Anteil bezogen auf die zu beschichtenden Polymer-Partikel gering gehalten werden kann. Sie bilden nach dem Aushärten bzw. Trocknen einen die Partikel ganz oder zumindest teilweise umhüllenden Film aus, der in den jeweiligen Kontaktbereichen einen stabilen Verbund der Partikel untereinander gewährleistet.

Neben einem einzelnen Bindemittel können auch Bindemittelmischungen umfassend wenigstens zwei verschiedene organische Bindemittel und/oder Bindemittel aus Polymermischungen oder Heteropolymere verwendet werden. Um eine optimale Verklebung der Polymer-Partikel untereinander und/oder mit der Platte aus expandiertem oder extrudiertem Polystyrol-Hartschaum zu erreichen, wird vorzugsweise ein organisches Bindemittel bzw. eine organische Bindemittelmischung verwendet, das bzw. die eine Glasübergangstemperatur unterhalb der Erweichungstemperatur der schäumbaren oder vorgeschäumten Polymer-Partikel besitzt.

Ferner wird vorgeschlagen, dass ein organisches Bindemittel in der Formulierung als wasserbasierte oder wasserfreie Dispersion, als Pulver oder als Dispersionspulver verwendet wird. Bei Verwendung eines wasserbasierten oder wasserfreien Dispersionsbindemittels ist eine gleichmäßige Beschichtung der Polymer-Partikel in einfacher Weise sichergestellt. Bei Verwendung eines pulverförmigen organischen Bindemittels kann eine gleichmäßige Beschichtung durch Mischen der Ausgangsstoffe erreicht werden.

Die Verwendung eines Bindemittels in Pulverform weist den Vorteil auf, dass das Bindemittel erst durch die Zugabe von Feuchtigkeit und/oder Wärme aktiviert wird. Die Beschichtung erfolgt durch Inkontaktbringen des pulverförmigen organischen Bindemittels mit den schäumbaren oder vorgeschäumten Polystyrol-Partikeln. Aufgrund der Oberflächenrauigkeit der Partikel wird durch das Inkontaktbringen eine Haftung des pulverförmigen Bindemittels an den Partikeln erreicht. Ergänzend kann Feuchtigkeit hinzugegeben werden, indem beispielsweise die Polystyrol-Partikel vor dem Inkontaktbringen mit dem pulverförmigen Bindemittel leicht angefeuchtet werden. Vorzugsweise erfolgt das Inkontaktbringen durch Mischen der Ausgangsstoffe, um eine gleichmäßige Verteilung des Bindemittels sicherzustellen.

Werden schäumbare Polystyrol-Partikel, sogenannte Polystyrol-Beads, verwendet, kann das Beschichten mit dem Bindemittel während eines Vorschäumprozesses erfolgen. Hierzu werden die Polystyrol-Beads und das Bindemittelpulver in einen Vorschäumbehälter gegeben, der vorzugsweise zugleich als Rührer oder Mischer ausgelegt ist. Die Bewegung im Vorschäumbehälter trägt dann zu einer gleichmäßigen Verteilung des Bindemittels bei. Wird beim Vorschäumen - wie regelmäßig der Fall - Wasserdampf als Heizmedium eingesetzt, führt dies zu einem Erweichen des Bindemittels. Unterstützt von der Bewegung der Polystyrol-Partikel im Vorschäumbehälter legt sich das erweichte Bindemittel um die Partikel, so dass diese zumindest teilweise von dem Bindemittel umhüllt werden.

Weiterhin bevorzugt werden die zumindest teilweise mit einem organischen Bindemittel beschichteten schäumbaren oder vorgeschäumten Polymer-Partikel vor dem vollständigen Trocknen des Bindemittels in die Form eingegeben und vor- oder endgeschäumt. Dadurch ist sichergestellt, dass das Bindemittel seine volle Bindekraft entfaltet und es zur Ausbildung eines zusammenhängenden Films im Kontaktbereich der Polymer-Partikel untereinander als auch im Kontaktbereich der Polymer-Partikel mit der Platte aus expandiertem oder extrudiertem Polystyrol-Hartschaum kommt.

In Weiterbildung der Erfindung wird vorgeschlagen, dass den beschichteten schäumbaren oder vorgeschäumten Polymer-Partikeln vor dem Einbringen in die Form unbeschichtete schäumbare oder vorgeschäumte Polymer-Partikel beigemischt werden. Über das Beimischen unbeschichteter schäumbarer oder vorgeschäumter Polymer-Partikel kann die Größe des zusammenhängenden Hohlraumvolumens und damit die Wasserdurchlässigkeit der das zusammenhängende Hohlraumvolumen aufweisenden Schicht gesteuert werden. Denn im Unterschied zu den beschichteten schäumbaren oder vorgeschäumten Polymer-Partikeln können sich die unbeschichteten schäumbaren oder vorgeschäumten Polymer-Partikel weitgehend ungehindert ausdehnen, wodurch das Zwickelvolumen zwischen den Partikeln verringert wird. Zugleich unterstützen die beigemischten unbeschichteten schäumbaren oder vorgeschäumten Polymer-Partikel ein Verschweißen der Partikel untereinander bzw. ein Verschweißen der Partikel mit der Platte aus expandiertem oder extrudiertem Polystyrol-Hartschaum, was sich positiv auf die mechanische Stabilität des herzustellenden Formkörpers auswirkt.

Der Anteil der unbeschichteten schäumbaren oder vorgeschäumten Polymer-Partikel beträgt vorzugsweise weniger als 50 Vol.-%, weiterhin vorzugsweise weniger als 30 Vol.-% und besonders bevorzugt weniger als 15 Vol.-% bezogen auf das Gesamtvolumen der beschichteten und unbeschichteten Polymer-Partikel. Das heißt, dass der Anteil unbeschichteter Partikel in jedem Fall geringer als der Anteil beschichteter Partikel ist, um die vorstehend in Zusammenhang mit den beschichteten Partikeln genannten Vorteile nicht zunichte zu machen.

Ferner kann es sich als vorteilhaft erweisen, dass den schäumbaren oder vorgeschäumten Polymer-Partikeln vor oder nach dem Beschichten mit dem organischen Bindemittel Fasern, Füllstoffe, Pigmente und/oder Additive, wie beispielsweise Verdicker, Netzmittel, Stabilisatoren, Entschäumer, Flammschutzmittel oder Rheologieadditive, zugegeben werden. Mittels der Additive können insbesondere die Verarbeitungseigenschaften beeinflusst werden, während die Fasern, Füllstoffe und/oder Pigmente vorrangig Einfluss auf die Eigenschaften des späteren Formkörpers haben.

Sofern der herzustellende Formkörper mit einem Flammschutzmittel ausgerüstet sein soll, wird vorzugsweise Blähgraphit als Flammschutzmittel zugegeben.

Gemäß einer bevorzugten Ausführungsform der Erfindung werden sämtliche Ausgangsstoffe zur Ausbildung der die Hohlraumstruktur ausbildenden Schicht homogen gemischt und anschließend in einer Form zur Durchführung eines Endschäumprozesses mit Platten aus expandiertem oder extrudiertem Polystyrol-Hartschaum in der Weise verbunden, dass die die Hohlraumstruktur ausbildende Schicht zwischen den Platten zu liegen kommt. Die Platten bilden somit außen liegende Deckschichten aus, welche die Aussteifung des derart hergestellten mehrschichtigen Formkörpers verbessern. Noch in der Form dienen die Platten als Trennlagen, die das Entformen des Formkörpers erleichtern.

Die das zusammenhängende Hohlraumvolumen aufweisende Schicht, welche einseitig oder beidseitig von einer Schicht aus expandiertem oder extrudiertem Polystyrol-Hartschaum abgedeckt wird, bildet bei dem nach dem erfindungsgemäßen Verfahren hergestellten Formkörper die eigentliche Drainageschicht aus. Denn aufgrund des zusammenhangenden Hohlraumvolumens ist diese Schicht wasserdurchlässig. Da eine herkömmliche EPS- oder XPS-Platte kein zusammenhängendes Hohlraumvolumen besitzt, ist diese nicht wasserdurchlässig. Sofern die wasserdurchlässige Schicht lediglich einseitig mit einer wasserundurchlässigen Schicht aus expandiertem oder extrudiertem Polystyrol-Hartschaum abgedeckt ist, wird der Formkörper bevorzugt derart an einer Außenwand eines Gebäudes angebracht, dass die wasserundurchlässige Schicht außen und die wasserdurchlässige Schicht unmittelbar an der Außenwand zu liegen kommen. Über die wasserdurchlässige Schicht kann dann die zwischen der Außenwand und dem Formkörper anfallende Feuchtigkeit abgeführt werden.

Der nach einem erfindungsgemäßen Verfahren hergestellte mehrschichtige Formkörper kann jedoch auch derart an einer Außenwand angebracht werden, dass eine wasserundurchlässige Schicht aus expandiertem oder extrudiertem Polystyrol-Hartschaum unmittelbar an der Außenwand zu liegen kommt. In diesem Fall erweist es sich als vorteilhaft, wenn wenigstens eine Platte aus expandiertem oder extrudiertem Polystyrol-Hartschaum verwendet wird, die Kanäle besitzt, die sich von einer Oberfläche der Platte bis zur anderen erstrecken. Die Kanäle können beispielsweise mittels Stanzen, Bohren und/oder Fräsen in die Platte eingebracht worden sein oder eingebracht werden. Die sich durch die Platte hindurch erstreckenden Kanäle bilden Entwässerungskanäle aus, welche die Platte wasserdurchlässig machen, so dass über die Kanäle eine Verbindung des Raums zwischen dem Formkörper und der Außenwand mit dem zusammenhängenden Hohlraumvolumen der angrenzenden Schicht herstellbar ist. Auf diese Weise kann Feuchtigkeit, die in den Raum zwischen dem Formkörper und der Außenwand gelangt, abtransportiert werden und die Außenwand wird trocken gehalten.

Das erfindungsgemäße Verfahren wird vorteilhafterweise in einem Formteilautomaten durchgeführt, der eine allseitige Durchströmung der Form mit Wasserdampf ermöglicht. Die allseitige Durchströmung beschleunigt den Endschäumprozess der schäumbaren oder vorgeschäumten Polymer-Partikel selbst dann, wenn die hieraus gebildete Schicht nicht nur einseitig von einer Platte aus expandiertem oder extrudiertem Polystyrol-Hartschaum abgedeckt wird. Alternativ oder ergänzend wird die Verwendung eines Formteilautomats vorgeschlagen, der nicht nur das Anlegen eines Überdrucks, sondern auch das Anlegen eines Unterdrucks ermöglicht.

Zur Lösung der eingangs genannten Aufgabe wird ferner ein mehrschichtiger Formkörper, umfassend wenigstens eine Schicht aus expandiertem und/oder extrudiertem Polystyrol-Hartschaum, vorgeschlagen. Dieser zeichnet sich erfindungsgemäß dadurch aus, dass die Schicht aus expandiertem oder extrudiertem Polystyrol-Hartschaum mit einer weiteren Schicht verbunden ist, die über ein organisches Bindemittel verbundene, geschäumte Polymer-Partikel sowie ein zwischen den Polymer-Partikeln verbleibendes Zwickelvolumen umfasst, das ein zusammenhängendes Hohlraumvolumen ausbildet. Die weitere Schicht ist aufgrund des zusammenhängenden Hohlraumvolumens wasserdurchlässig. Das heißt, dass die weitere Schicht Feuchtigkeit abzuleiten vermag. Der vorgeschlagene mehrschichtige Formkörper ist demnach nicht nur zur Wärmedämmung von Gebäuden geeignet, sondern ferner als Drainageplatte einsetzbar.

Die Polymer-Partikel der weiteren Schicht sind zumindest teilweise über das enthaltene organische Bindemittel verbunden. Ergänzend können die Polymer-Partikel miteinander verschweißt sein, wobei in Bereichen, in denen eine Verbindung über das Bindemittel besteht, keine oder nur eine teilweise Verschweißung vorzufinden ist.

Die Polymer-Partikel der weiteren Schicht sind daher zumindest teilweise von einem Bindemittelfilm umschlossen, der die Verbindung der Partikel untereinander bewirkt.

Der vorgeschlagene mehrschichtige Formkörper ist vorzugsweise nach dem vorstehend beschriebenen erfindungsgemäßen Verfahren hergestellt. Der Einsatz des erfindungsgemäßen Verfahrens stellt die Ausbildung eines zusammenhängenden Hohlraumvolumens über das verbleibende Zwickelvolumen sicher. Ferner gewährleistet der Einsatz des erfindungsgemäßen Verfahrens, dass der auf diese Weise hergestellte mehrschichtige Formkörper eine ausreichende mechanische Stabilität besitzt. Denn über die Bindekraft des enthaltenen organischen Bindemittels wird ein stabiler Verbund der Polymer-Partikel untereinander bewirkt.

Bevorzugt ist auch die Schicht aus expandiertem oder extrudiertem Polystyrol-Hartschaum über das in der weiteren Schicht enthaltene organische Bindemittel mit der weiteren Schicht verbunden. Dies gilt insbesondere, wenn das erfindungsgemäße Verfahren Einsatz findet. Denn bei dem erfindungsgemäßen Verfahren wird zur Ausbildung der Schicht aus expandiertem oder extrudiertem Polystyrol-Hartschaum "totes" Material in Form einer EPS- oder XPS-Platte verwendet, die vor dem Einfüllen der Polymer-Partikel in die Form eingestellt bzw. eingelegt wird. Da die Verwendung "toten" Materials ein Verschweißen der Polymer-Partikel mit der EPS- oder XPS-Platte erschwert, wird vorzugsweise die Verbindung der Schichten über das organische Bindemittel bewirkt.

Um einerseits eine ausreichende mechanische Stabilität des mehrschichtigen Formkörpers zu gewährleisten und andererseits das Zwickelvolumen zwischen den Polymer-Partikeln weitgehend frei von Bindemittel zu halten, wird vorgeschlagen, dass der Bindemittelanteil in der weiteren Schicht 0,5-75 Gew.-%, vorzugsweise 1-50 Gew.-%, weiterhin vorzugsweise 1,5-25 Gew.-% bezogen auf das Gesamtgewicht der Polymer-Partikel der weiteren Schicht beträgt.

In einer vorteilhaften Ausgestaltung der Erfindung besitzt die weitere Schicht eine Schichtstärke von 10-500 mm und/oder eine Rohdichte von 15-60 kg/m³. Mit der Stärke der weiteren Schicht steigen die Taktzeiten, da eine größere Menge schäumbarer oder vorgeschäumter Polymer-Partikel endgeschäumt werden muss. Aus diesem Grund erweist sich eine dünnere Schicht als vorteilhaft. Die Schichtstärke sollte jedoch ausreichend bemessen sein, um die Drainagefunktion sicherzustellen.

Alternativ oder ergänzend wird vorgeschlagen, dass die mit der weiteren Schicht verbundene Schicht aus expandiertem oder extrudiertem Polystyrol-Hartschaum eine Schichtstärke von 0,1-50 mm und/oder eine Rohdichte von 10-40 kg/m³ besitzt. In der Funktion als Deckschicht kann die Stärke der mit der weiteren Schicht verbundenen Schicht aus expandiertem oder extrudiertem Polystyrol-Hartschaum geringer als die Stärke der weiteren Schicht gehalten werden. Es kann sich jedoch auch umgekehrt verhalten, um beispielsweise die Taktzeiten bei der Herstellung des Formkörpers zu erhöhen.

Bevorzugt sind in der Schicht aus expandiertem oder extrudiertem Polystyrol-Hartschaum Kanäle ausgebildet, die sich gerade oder schräg verlaufend durch die gesamte Schicht erstrecken. Die Kanäle dienen als Entwässerungskanäle.

In der Anwendung als Drainageplatte wird der mehrschichtige Formkörper vorzugsweise derart eingebaut, dass die die Kanäle aufweisende Schicht der zu dämmenden Außenwand zugewandt ist. Feuchtigkeit, die zwischen die Außenwand und den Formkörper gelangt, kann dann über die Kanäle nach außen abgeführt werden. Dabei trifft die Feuchtigkeit auf die wasserdurchlässige weitere Schicht, über welche die Feuchtigkeit vollständig abtransportiert wird.

Sofern die Kanäle schräg verlaufend ausgebildet sind, wird der Formkörper bevorzugt in der Weise eingebaut, dass die Kanäle von der Außenwand weg nach unten verlaufen. Durch den schrägen Verlauf wird eine Entwässerungsrichtung vorgegeben, die den Abtransport von Feuchtigkeit zusätzlich begünstigt. Ein gerader Verlauf der Kanäle durch die Deckschicht hindurch besitzt den Vorteil, dass die Einbaulage des Formkörpers beliebig ist.

Sofern die wasserdurchlässige Schicht beidseits von jeweils einer Schicht aus expandiertem oder extrudiertem Polystyrol-Hartschaum mit schräg verlaufenden Kanälen abgedeckt ist, sind die Kanäle vorzugsweise spiegelsymmetrisch ausgebildet. Das heißt, dass die Kanäle entgegengesetzt geneigt ausgebildet sind.

Weiterhin bevorzugt sind die Kanäle regelmäßig angeordnet und besitzen einen eckigen oder runden Querschnitt. Beispielsweise kann der Querschnitt schlitzförmig ausgebildet sein.

Der vorgeschlagene mehrschichtige Formkörper wird aufgrund seiner Vorzüge vorzugsweise als Wärmedämm- und Drainageplatte verwendet. In dieser Anwendung kommen die Vorzüge des erfindungsgemäßen mehrschichtigen Formkörpers besonders gut zum Tragen. Weitere Einsatzbereiche sind denkbar, beispielsweise im Bereich der Innendämmung.

Das erfindungsgemäße Verfahren wird nachfolgend anhand eines bevorzugten Ausführungsbeispiels näher erläutert.

### Au sführung sbeispiel

Es werden 85 Gew.-% EPS-Beads mit 15 Gew.-% Dispersionspulver (Basis Terpolymer aus Ethylen, Vinyllaurat und Vinylchlorid) gemischt und unter Zugabe von Druck (1 bar) und Wärme (100°C), wobei Wasserdampf als Heizmedium dient, vorgeschäumt. Dabei erweicht das Dispersionspulver und bildet einen Polymerfilm auf den vorgeschäumten EPS-Perlen aus. Anschließend werden die beschichteten und vorgeschäumten EPS-Perlen in einem Fließbetttrockner kurz getrocknet.

Eine herkömmliche 1 cm starke (weiße) EPS-Platte mit den Abmessungen 80 cm x 120 cm wird in eine Form gleicher Abmessungen eines Formteilautomaten eingelegt. Die Höhe der Form beträgt 12 cm. Anschließend wird die Form vollständig mit den zuvor beschichteten vorgeschäumten EPS-Perlen gefüllt.

Danach wird der Forminhalt zu einer mehrschichtigen Platte mit einer Stärke von 12 cm endgeschäumt, indem Wasserdampf eingeleitet und ein Unterdruck angelegt wird. Beim Endschäumen verdichten sich die vorgeschäumten beschichteten EPS-Partikel zu einer ein zusammenhängendes Hohlraumvolumen ausbildenden und zugleich mechanisch stabilen Schicht, da der Verbund zugleich über die Klebe- bzw. Bindekraft des Bindemittels erzielt wird. Die Bindekraft des Bindemittels gewährleistet ferner einen stabilen Verbund der Schichten untereinander. Denn durch die Verwendung einer herkömmlichen EPS-Platte wird eine Verschweißung der Schichten nur in einem geringen Maße erreicht, da die in der Platte enthaltenen Polystyrol-Partikel bereits endgeschäumt sind.

Vorliegend erfolgt das Endschäumen der mehreren Schichten zur Herstellung des mehrschichtigen Formkörpers vorzugsweise unter Zugabe von Wärme, und zwar bei einer Temperatur zwischen 80°C und 120°C. Dies kann zum Erweichen des "toten" Materials führen, so dass zumindest ein teilweises Verschweißen der Schichten bewirkt wird.

Der erfindungsgemäße mehrschichtige Formkörper wird nachfolgend anhand der Figuren näher erläutert. Diese zeigen:
Figur 1 einen Querschnitt durch einen erfindungsgemäßen mehrschichtigen Formkörper gemäß einer bevorzugten Ausführungsform,
Figur 2 eine Draufsicht auf den Formkörper der Figur 1 und
Figur 3 eine Draufsicht auf einen Formkörper gemäß einer alternativen bevorzugten Ausführungsform.

### Ausführliche Beschreibung der Figuren

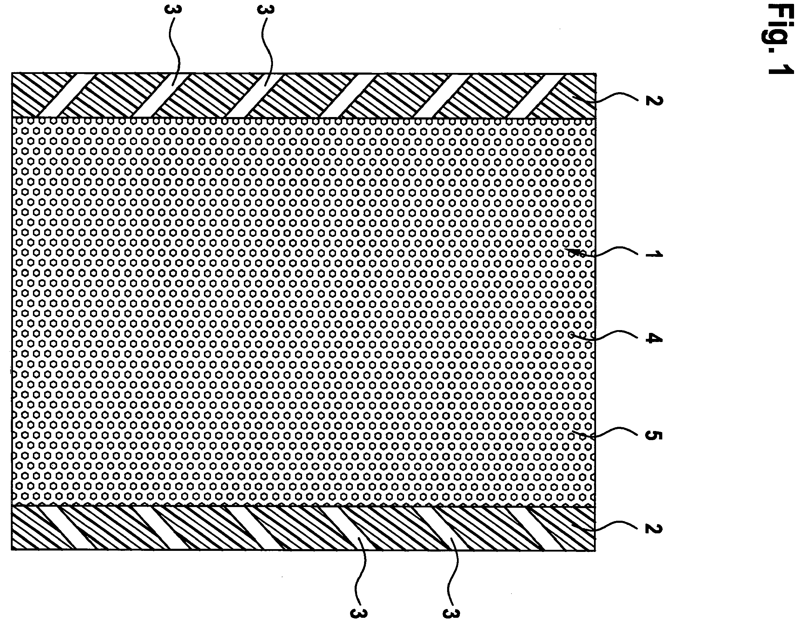

Der in der Figur 1 dargestellte mehrschichtige Formkörper umfasst insgesamt drei Schichten, und zwar eine wasserdurchlässige innen liegende Schicht 1, die beidseits von Deckschichten ausbildenden Schichten 2 eingefasst ist. Die wasserdurchlässige innen liegende Schicht 1 ist vorrangig aus expandierten Polystyrol-Partikeln 4 gebildet, die über einen die Partikel umhüllenden Film aus einem organischen Bindemittel verbunden sind. Das zwischen den Partikeln 4 verbleibende Zwickelvolumen bildet ein zusammenhängendes Hohlraumvolumen 5 aus, das dazu führt, dass die Schicht 1 wasserdurchlässig ist. Die Schicht 1 vermag somit eine Drainagefunktion zu erfüllen.

Die außen liegenden Schichten 2 bestehen jeweils aus herkömmlichem expandierten Polystyrol-Hartschaum und bilden wasserundurchlässige Schichten aus, da ihnen ein zusammenhängendes Hohlraumvolumen fehlt. Um jedoch Feuchtigkeit von außen der innen liegenden Schicht 1 zuzuleiten, weisen die Deckschichten 2 Kanäle 3 auf, die sich von außen schräg nach unten verlaufend durch die Schicht 2 hindurch bis an die innen liegende Schicht 1 erstrecken. Die Kanäle 3 lenken die Feuchtigkeit von außen in Richtung der innen liegenden Schicht 1. Dies wird vorliegend noch dadurch unterstützt, dass der Verlauf der Kanäle 3 schräg gewählt ist.

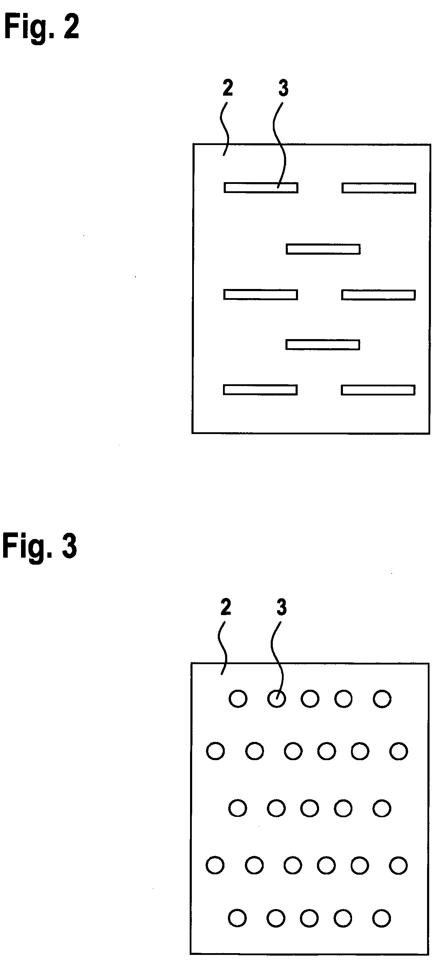

Wie den Figuren 2 und 3 zu entnehmen ist, kann die Anzahl, Anordnung und Größe der Kanäle 3 den Anforderungen entsprechend gewählt werden. Die Querschnittsform ist ebenfalls frei wählbar und kann beispielsweise schlitzförmig (Figur 2) oder kreisrund (Figur 3) sein.

## Patentansprüche

1. Verfahren zur Herstellung eines mehrschichtigen Formkörpers zur Wärmedämmung von Gebäuden, bei dem schäumbare oder vorgeschäumte Polymer-Partikel zur Ausbildung einer Schicht verwendet werden, die zumindest teilweise mit einem organischen Bindemittel beschichtet sind,
**dadurch gekennzeichnet, dass** die zumindest teilweise mit dem organischen Bindemittel beschichteten schäumbaren oder vorgeschäumten Polymer-Partikel in einer Form zur Durchführung eines Endschäumprozesses mit wenigstens einer Platte aus expandiertem oder extrudiertem Polystyrol-Hartschaum verbunden werden, wobei ein stabiler Verbund der schäumbaren oder vorgeschäumten Polymer-Partikel mit der Platte über das Bindemittel bewirkt wird.

2. Verfahren nach Anspruch 1,
**dadurch gekennzeichnet, dass** zur Beschichtung der schäumbaren oder vorgeschäumten Polymer-Partikel 0,5-75 Gew.-%, vorzugsweise 1-50 Gew.-%, weiterhin vorzugsweise 1,5-25 Gew.-% wenigstens eines organischen Bindemittels bezogen auf das Gesamtgewicht der schäumbaren oder vorgeschäumten Polymer-Partikel verwendet werden.

3. Verfahren nach Anspruch 1 oder 2,
**dadurch gekennzeichnet, dass** Polymer-Partikel aus Polystyrol, Polyethylen, Polypropylen und/oder Polylactid verwendet werden.

4. Verfahren nach einem der vorhergehenden Ansprüche,
**dadurch gekennzeichnet, dass** ein duroplastisches Bindemittel, beispielsweise Epoxidharz oder Polyurethan, und/oder ein thermoplastisches Bindemittel, beispielsweise Homo-, Co- oder Terpolymere von Acrylat, Styrolacrylat, Vinylacetat, Ethylen, Vinylversatat, Vinyllaurat, Alkylacrylat und/oder Vinylchlorid, als organisches Bindemittel verwendet wird.

5. Verfahren nach einem der vorhergehenden Ansprüche,
**dadurch gekennzeichnet, dass** ein organisches Bindemittel in der Formulierung als wasserbasierte oder wasserfreie Dispersion, als Pulver oder als Dispersionspulver zum Beschichten der schäumbaren oder vorgeschäumten Polymer-Partikel verwendet wird.

6. Verfahren nach einem der vorhergehenden Ansprüche,
**dadurch gekennzeichnet, dass** die zumindest teilweise mit einem organischen Bindemittel beschichteten schäumbaren oder vorgeschäumten Polymer-Partikel vor dem vollständigen Trocknen des Bindemittels in die Form eingegeben und vor- oder endgeschäumt werden.

7. Verfahren nach einem der vorhergehenden Ansprüche,
**dadurch gekennzeichnet, dass** den beschichteten schäumbaren oder vorgeschäumten Polymer-Partikeln vor dem Einbringen in die Form unbeschichtete schäumbare oder vorgeschäumte Polymer-Partikel beigemischt werden, wobei vorzugsweise der Anteil der unbeschichteten schäumbaren oder vorgeschäumten Polymer-Partikel weniger als 50 Vol.-%, weiterhin vorzugsweise weniger als 30 Vol.-% und besonders bevorzugt weniger als 15 Vol.-% bezogen auf das Gesamtvolumen der beschichteten und unbeschichteten schäumbaren oder vorgeschäumten Polymer-Partikel beträgt.

8. Verfahren nach einem der vorhergehenden Ansprüche,
**dadurch gekennzeichnet, dass** den schäumbaren oder vorgeschäumten Polymer-Partikeln vor oder nach dem Beschichten mit dem organischen Bindemittel Fasern, Füllstoffe, Pigmente und/oder Additive, wie beispielsweise Verdicker, Netzmittel, Stabilisatoren, Entschäumer, Flammschutzmittel oder Rheologieadditive, zugegeben werden.

9. Verfahren nach einem der vorhergehenden Ansprüche,
**dadurch gekennzeichnet, dass** Blähgraphit als Flammschutzmittel zugegeben wird.

10. Verfahren nach einem der vorhergehenden Ansprüche,
**dadurch gekennzeichnet, dass** wenigstens eine Platte aus expandiertem oder extrudiertem Polystyrol-Hartschaum verwendet wird, die Kanäle besitzt, die sich von einer Oberfläche der Platte bis zur anderen Oberfläche erstrecken.

11. Mehrschichtiger Formkörper zur Wärmedämmung von Gebäuden, umfassend wenigstens eine Schicht (2) aus expandiertem und/oder extrudiertem Polystyrol-Hartschaum,
die mit einer weiteren Schicht (1) verbunden ist, die über ein organisches Bindemittel verbundene, geschäumte Polymer-Partikel (4) umfasst,
**dadurch gekennzeichnet, dass** die weitere Schicht (1) ein zwischen den Polymer-Partikeln (4) verbleibendes Zwickelvolumen (5) umfasst, das ein zusammenhängendes, wasserdurchlässiges Hohlraumvolumen ausbildet.

12. Formkörper nach Anspruch 11,
**dadurch gekennzeichnet, dass** die Schicht (2) aus expandiertem oder extrudiertem Polystyrol-Hartschaum über das in der weiteren Schicht (1) enthaltene organische Bindemittel mit der weiteren Schicht (1) verbunden ist.

13. Formkörper nach Anspruch 11 oder 12,
**dadurch gekennzeichnet, dass** der Anteil des organischen Bindemittels in der weiteren Schicht (1) 0,5-75 Gew.-%, vorzugsweise 1-50 Gew.-%, weiterhin vorzugsweise 1,5-25 Gew.-% bezogen auf das Gesamtgewicht der Polymer-Partikel (4) der weiteren Schicht (1) beträgt.

14. Formkörper nach einem der Ansprüche 11 bis 13,
**dadurch gekennzeichnet, dass** die weitere Schicht (1) eine Schichtstärke von 10-500 mm und/oder eine Rohdichte von 15-60 kg/m³ besitzt.

15. Formkörper nach einem der Ansprüche 11 bis 14,
**dadurch gekennzeichnet, dass** die mit der weiteren Schicht (1) verbundene Schicht (2) aus expandiertem oder extrudiertem Polystyrol-Hartschaum eine Schichtstärke von 0,1-50 mm und/oder eine Rohdichte von 10-40 kg/m³ besitzt.

16. Formkörper nach einem der Ansprüche 11 bis 15,
**dadurch gekennzeichnet, dass** in der Schicht (2) aus expandiertem oder extrudiertem Polystyrol-Hartschaum Kanäle (3) ausgebildet sind, die sich gerade oder schräg verlaufend durch die gesamte Schicht (2) erstecken.

17. Formkörper nach Anspruch 16,
**dadurch gekennzeichnet, dass** die Kanäle (3) regelmäßig angeordnet sind und einen eckigen oder runden Querschnitt besitzen.

18. Verwendung eines Formkörpers nach einem der 11 bis 17 als Wärmedämm- und Drainageplatte.

## Claims

1. A process for the production of a multilayered moulded article for the thermal insulation of buildings, in which foamable or prefoamed polymer particles which are at least partially coated with an organic binding agent are used to form a layer,
**characterized in that** the foamable or prefoamed polymer particles which are at least partially coated with the organic binding agent are in a form for carrying out a final foaming process with at least one board of expanded or extruded rigid polystyrene foam, whereby a stable composite of the foamable or prefoamed polymer particles with the board is produced by means of the binding agent.

2. The process as claimed in claim 1,
**characterized in that** in order to coat the foamable or prefoamed polymer particles, 0.5 - 75 % by weight, preferably 1 - 50 % by weight, more preferably 1.5 - 25 % by weight of at least one organic binding agent with respect to the total weight of the foamable or prefoamed polymer particles is used.

3. The process according to claim 1 or 2,
**characterized in that** polymer particles formed from polystyrene, polyethylene, polypropylene and/or polylactide are employed.

4. The process according to any one of the preceding claims,
**characterized in that** a thermosetting binding agent, for example epoxy resin or polyurethane, and/or a thermoplastic binding agent, for example homo-, co- or ter-polymers of acrylate, styrene acrylate, vinyl acetate, ethylene, vinyl versatate, vinyl laurate, alkyl acrylate and/or vinyl chloride is used as the organic binding agent.

5. The process according to any one of the preceding claims,
**characterized in that** an organic binding agent is used in the formulation as a water-based or anhydrous dispersion, as a powder or as a dispersion powder in order to coat the foamable or prefoamed polymer particles.

6. The process according to any one of the preceding claims,
**characterized in that** the foamable or prefoamed polymer particles at least partially coated with an organic binding agent are introduced into the mould before the binding agent is completely dry and pre-foamed or finally foamed.

7. The process according to any one of the preceding claims,
**characterized in that** uncoated foamable or prefoamed polymer particles are admixed with the coated foamable or prefoamed polymer particles before being introduced into the mould, wherein preferably, the fraction of the uncoated foamable or prefoamed polymer particles is less than 50 % by volume, more preferably less than 30 % by volume and particularly preferably less than 15 % by volume with respect to the total volume of the coated and non-coated foamable or prefoamed polymer particles.

8. The process according to any one of the preceding claims,
**characterized in that** before or after coating with the organic binding agent, fibres, fillers, pigments and/or additives, for example thickeners, wetting agents, stabilizers, defoaming agents, flame retardants or rheological additives, are added to the foamable or prefoamed polymer particles.

9. The process according to any one of the preceding claims,
**characterized in that** expanded graphite is added as the flame retardant.

10. The process according to any one of the preceding claims,
**characterized in that** at least one board formed from expanded or extruded rigid polystyrene foam is used which contains channels which extend from one surface of the board to the other surface.

11. A multilayered moulded article for the thermal insulation of buildings, comprising at least one layer (2) formed from expanded and/or extruded rigid polystyrene foam,
which is bonded with a further layer (1) which comprises foamed polymer particles (4) bonded together with an organic binding agent, **characterized in that** the further layer (1) comprises a residual interstitial volume (5) between the polymer particles (4) which forms a coherent, water-permeable void volume.

12. The moulded article according to claim 11,
**characterized in that** the layer (2) formed from expanded or extruded rigid polystyrene foam is bonded with the further layer (1) via the organic binder contained in the further layer (1).

13. The moulded article according to claim 11 or 12,
**characterized in that** the fraction of the organic binding agent in the further layer (1) is 0.5 - 75 % by weight, preferably 1 - 50 % by weight, more preferably 1.5 - 25 % by weight with respect to the total weight of the polymer particles (4) of the further layer (1).

14. The moulded article according to any one of claims 11 to 13,
**characterized in that** the further layer (1) has a layer thickness of 10 - 500 mm and/or a bulk density of 15 - 60 kg/m³.

15. The moulded article according to any one of claims 11 to 14,
**characterized in that** the layer (2) of expanded or extruded rigid polystyrene foam bonded with the further layer (1) has a layer thickness of 0.1 - 50 mm and/or a bulk density of 10 - 40 kg/m³.

16. The moulded article according to any one of claims 11 to 15,
**characterized in that** channels (3) are formed in the layer (2) of expanded or extruded rigid polystyrene foam which extend through the whole layer (2) in a straight or inclined manner.

17. The moulded article according to claim 16,
**characterized in that** the channels (3) are disposed in a regular manner and have an angular or rounded cross section.

18. Use of a moulded article according to any one of claims 11 to 17, as a thermal insulation and drainage board.

## Revendications

1. Dispositif destiné à fabriquer un corps moulé multicouches pour l'isolation thermique de bâtiments, lors duquel on utilise pour former une couche des particules polymères expansibles ou pré-expansées qui sont revêtues au moins en partie d'un liant organique,
**caractérisé en ce que** pour réaliser un processus d'expansion finale, on relie les particules polymères revêtues au moins en partie du liant organique dans un moule avec au moins une plaque en mousse de polystyrène solidifiée expansée ou extrudée, une liaison stable des particules polymères expansibles ou pré-expansées avec la plaque étant provoquée via le liant.

2. Procédé selon la revendication 1,
**caractérisé en ce que** pour revêtir les particules polymères expansibles ou pré-expansées, on utilise de 0,5 - 75 % en poids, de préférence de 1 - 50 % en poids, de manière préférée par ailleurs de 1,5 - 25 % en poids d'au moins un liant organique en rapport au poids total des particules polymères expansibles ou pré-expansées.

3. Procédé selon la revendication 1 ou 2,
**caractérisé en ce qu'**on utilise des particules polymères en polystyrène, en polyéthylène, en polypropylène et/ou en polylactide.

4. Procédé selon l'une quelconque des revendications précédentes,
**caractérisé en ce qu'**on utilise un liant duroplastique, par exemple une résine époxy ou du polyuréthane et/ou un liant thermoplastique, par exemple des homopolymères, des copolymères ou des terpolymères d'acrylate, un styrène- acrylate, un acétate de vinyle, un éthylène, un versatate de vinyle, un laurate de vinyle, un acrylate d'alkyle et/ou un chlorure de vinyle en tant que liant organique.

5. Procédé selon l'une quelconque des revendications précédentes,
**caractérisé en ce qu'**on utilise un liant organique dans la formulation en tant que dispersion aqueuse ou anhydre, en tant que poudre ou poudre de dispersion pour revêtir les particules polymères expansibles ou pré-expansées.

6. Procédé selon l'une quelconque des revendications précédentes,
**caractérisé en ce qu'**avant le séchage complet du liant, on place dans le moule les particules polymères expansibles ou pré-expansées, revêtues au moins en partie d'un liant organique et on les soumet à une pré-expansion ou à une expansion finale.

7. Procédé selon l'une quelconque des revendications précédentes,
**caractérisé en ce qu'**avant de les placer dans le moule, on rajoute aux particules polymères expansibles ou pré-expansées revêtues des particules polymères expansibles ou pré-expansées non revêtues, la part en particules polymères expansibles ou pré-expansées non revêtues étant de préférence de moins de 50 % en volume, de manière préférée par ailleurs de moins de 30 % en volume et de manière particulièrement préférée de moins de 15 % en volume en rapport au volume total des particules polymères expansibles ou pré-expansées revêtues.

8. Procédé selon l'une quelconque des revendications précédentes,
**caractérisé en ce qu'**avant ou après le revêtement avec le liant organique, on ajoute aux particules polymères expansibles ou pré-expansées des fibres, des agents de charge, des pigments et/ou des additifs, comme par exemple des épaississants, des agents mouillants, des stabilisateurs, des agents anti-moussants, des agents ignifuges ou des additifs rhéologiques.

9. Procédé selon l'une quelconque des revendications précédentes,
**caractérisé en ce qu'**on ajoute du graphite expansible en tant qu'agent ignifuge.

10. Procédé selon l'une quelconque des revendications précédentes,
**caractérisé en ce qu'**on utilise au moins une plaque en mousse de polystyrène solidifiée expansée ou extrudée qui comporte des canaux qui s'étendent d'une surface de la plaque jusqu'à l'autre surface.

11. Corps moulé multicouches pour l'isolation thermique de bâtiments, comprenant au moins une couche (2) en mousse de polystyrène solidifiée expansée ou extrudée,
qui est reliée avec une couche (1) supplémentaire, qui comporte des particules polymères (4) expansées, reliées par un liant organique,
**caractérisé en ce que** la couche supplémentaire (1) comprend un volume interstitiel (5) restant entre les particules polymères (4) qui forme un volume de vide cohérent, perméable à l'eau.

12. Corps moulé selon la revendication 11,
**caractérisé en ce que** la couche (2) en mousse de polystyrène solidifiée expansée ou extrudée est relié par l'intermédiaire du liant organique contenu dans la couche supplémentaire (1) avec la couche supplémentaire (1).

13. Corps moulé selon la revendication 11 ou 12,
**caractérisé en ce que** la part en liant organique dans la couche supplémentaire (1) est de 0,5 - 75 % en poids, de préférence de 1 - 50 % en poids, de manière préférée par ailleurs de 1,5 - 25 % en poids d'au moins un liant organique en rapport au poids total des particules polymères.

14. Corps moulé selon l'une quelconque des revendications 11 à 13,
**caractérisé en ce que** la couche supplémentaire (1) présente une épaisseur de couche de 10 - 500 mm et/ou une masse volumique apparente de 15 - 60 kg/m³.

15. Corps moulé selon l'une quelconque des revendications 11 à 14,
**caractérisé en ce que** la couche (2) en mousse de polystyrène solidifiée expansée ou extrudée reliée avec la couche supplémentaire (1) présente une épaisseur de couche de 0,1 - 50 mm et/ou une masse volumique apparente de 10 - 40 kg/m³.

16. Corps moulé selon l'une quelconque des revendications 11 à 15,
**caractérisé en ce que** dans la couche (2) en mousse de polystyrène solidifiée expansée ou extrudée sont conçus des canaux (3) qui s'étendent en trajet rectiligne ou en diagonale à travers l'ensemble de la couche (2).

17. Corps moulé selon la revendication 16,
**caractérisé en ce que** les canaux (3) sont placés régulièrement et présentent une section transversale angulaire ou ronde.

18. Utilisation d'un corps moulé selon l'une quelconque des revendications 11 à 17 en tant que panneau d'isolation thermique ou de drainage.
